# EUROPÄISCHE PATENTSCHRIFT

(11) **EP 1 271 029 B1**
(45) Veröffentlichungstag und Bekanntmachung des Hinweises auf die Patenterteilung: **23.08.2006**
(21) Anmeldenummer: 02011900.4
(22) Anmeldetag: 29.05.2002
(51) Int. Cl.: F16K 31/122, F15B 13/042

(54) **Vorrichtung mit Blasstationen zur Blasformung von Behältern**
System with blowing stations for blow-moulding containers
Installation avec des stations de soufflage pour moulage de récipients par soufflage

(30) Priorität: 29.06.2001 DE 10131557
(43) Veröffentlichungstag der Anmeldung: 02.01.2003
(73) Patentinhaber: SIG Corpoplast GmbH & Co. KG, 22145 Hamburg (DE)
(72) Erfinder: Vogel, Klaus, 22885 Barsb-ttel (DE); Litzenberg, Michael, 21502 Geesthacht (DE)
(74) Vertreter: Klickow, Hans-Henning

(56) Entgegenhaltungen:
- DE-A- 19 956 575
- US-A- 3 155 367
- US-A- 4 267 861
- US-A- 4 644 969

## Beschreibung

Die Erfindung betrifft eine Vorrichtung mit auf einem rotierenden Blasrad angeordneten Blasstationen zur Blasformung von Behältern aus einem thermoplastischen Material, mit einer Einrichtung zur pneumatischen Steuerung eines Blasdruckes.

Derartige Vorrichtungen werden bei der Herstellung von blasgeformten Behältern eingesetzt, um eine mit der Durchführung des Blasvorganges koordinierte Zuleitung eines oder mehrerer Blasdrücke durchführen zu können.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die für die Blasluftzuführung der Blasstation eingesetzten Vorrichtungen zur pneumatischen Steuerung sind typischerweise als Hochdruckventile realisiert, bei denen ein Steuerkolben von einem Steuerdruck derart positioniert wird, daß der Steuerkolben entweder einen Strömungsweg für den Blasdruck verschließt oder diesen freigibt. Zur Gewährleistung einer ausreichenden Abdichtung sind die bekannten Steuerkolben im Bereich einer Dichtfläche üblicherweise mit einem Elastomer vulkanisiert.

Nachteilig bei den bekannten Steuerkolben ist es insbesondere, daß aufgrund der metallischen Ausbildung des Steuerkolbens ein unmittelbarer Kontakt mit der Wandung des umgebenden Zylinders vermieden werden muß, da ansonsten ein starker Verschleiß auftreten würde. Zur Vermeidung dieses Kontaktes werden ähnlich zur Anordnung von Kolbenringen Führungsbänder aus Kunststoff oder ähnlichen weichen Materialien verwendet, die als Führungselemente eingesetzt werden. Für diese Führungsbänder müssen entsprechende Ausnehmungen im Bereich der Kolbenwandung eingebracht werden, die entsprechende Fertigungskosten zur Folge haben. Darüber hinaus führt die Montage der Führungsbänder auch zu einem entsprechenden Kostenaufwand.

Aus der US-A-4,267,861 ist ein in einem Zylinder geführter Steuerkolben bekannt, der zur Drucksteuerung vorgesehen ist. Der Kolben ist aus einem Kunststoff ausgebildet und wird in einem wenigstens bereichsweise aus Kunststoff ausgebildeten Gehäuse geführt.

In der US-A-4,644,969 wird eine Ventilanordnung zur Steuerung einer Wasserströmung beschrieben, bei der das Ventil druckluftbetätigt ist. Der Kolben ist aus Kunststoff ausgebildet.

In der DE-A-199 56 575 wird ein pneumatisch betätigtes Hochdruckventil für aggressive Medien beschrieben. Zur Bereitstellung einer ausreichenden Beständigkeit gegenüber einer Einwirkung der aggressiven Medien liegt eine mindestens bereichsweise Ausbildung aus Kunststoff vor.

In der US-A-3,155,367 wird ein weiteres Steuerventil beschrieben, bei dem ein Ventilkolben bereichsweise aus Kunststoff ausgebildet ist. Der Kolben des Ventils wird mit einer Schaftkappe aus einem gummiartigen Material versehen.

Aufgabe der vorliegenden Erfindung ist es, eine Vorrichtung der einleitend genannten Art derart zu konstruieren, daß der konstruktive Aufbau verbessert wird.

Diese Aufgabe wird erfindungsgemäß dadurch gelöst, die Einrichtung zur pneumatischen Steuerung einen in einem Zylinder geführten Steuerkolben aufweist, der in Richtung einer Kolbenlängsachse verschieblich gelagert ist und bei der durch den Zylinder hindurch ein vom Steuerkolben verschließbarer Hauptströmungsweg verläuft, sowie bei der der Steuerkolben mit einer Steuerfläche versehen ist, die einem Steuerraum des Zylinders zugewandt ist und die zur Übertragung einer Steuerkraft auf den Steuerkolben ausgebildet ist, und bei der der Steuerkolben mindestens bereichsweise aus einem Kunststoff ausgebildet ist, sowie bei der der Hauptströmungsweg derart angeordnet ist, daß bei einer Absenkung des Steuerdruckes der Steuerkolben durch den einwirkenden Hochdruck in Richtung der Kolbenlängsachse verschoben wird.

Durch die Ausbildung des Steuerkolbens aus Kunststoff wird zumindest in den aus Kunststoff gefertigten Bereichen ein metallischer Kontakt mit der Wandung des Zylinders vermieden. Separate Führungsbänder können deshalb vermieden werden. Die Ausbildung des Steuerkolbens aus Kunststoff führt darüber hinaus zu einem verringerten Gewicht und somit auch zu einer verringerten Masseträgheit sowie zu einer verminderten Reibung bei einer Positionierung des Kolbens. Es sind deshalb geringere Positionierkräfte als bei einer metallischen Realisierung des Steuerkolbens erforderlich.

Durch diese Konstruktion ist es somit auch möglich, den maximalen Steuerdruck zu vermindern und hierdurch sowohl eine deutliche Reduzierung der Schaltzeiten als auch eine deutliche Verlängerung der Funktionsfähigkeit zu erreichen. Die Verringerung des Steuerdruckes führt zusätzlich zu einer Geräuschverringerung, so daß in gerätetechnischer Hinsicht geringer dimensionierte und somit preiswertere Schalldämpfer eingesetzt werden können.

Eine einfache Montierbarkeit wird dadurch unterstützt, daß der Steuerkolben mindestens zweiteilig ausgebildet ist.

Insbesondere ist bei einer mehrteiligen Realisierung des Steuerkolbens daran gedacht, daß der Steuerkolben eine Schaftkappe aufweist.

Ein einfaches Zusammensetzen der einzelnen Bauteile des Steuerkolbens kann dadurch erreicht werden, daß die Schaftkappe über eine Schnappverbindung im Bereich eines Kolbenschaftes des Steuerkolbens befestigt ist.

Insbesondere wird eine sichere Arretierung der Schaftkappe dadurch erreicht, daß der Kolbenschaft eine Nut zur Halterung der Schaftkappe aufweist. Es ist aber auch möglich, den Kolbenschaft mit einem Außenprofil zu versehen, das in ein entsprechendes Gegenprofil der Schaftkappe eingreift.

Eine formschlüssige Befestigung der Schaftkappe wird auch dadurch unterstützt, daß die Schaftkappe mit einem Steg in die Nut eingreift. Alternativ kann auch die Schaftkappe mit einer Nut versehen sein, in die ein korrespondierender Steg eingreift.

Zur Vermeidung von aufvulkanisierten Dichtungen wird vorgeschlagen, daß die Schaftkappe mindestens bereichsweise aus Kunststoff ausgebildet ist.

Besonders günstige Materialeigenschaften können dadurch erreicht werden, daß die Schaftkappe mindestens bereichsweise aus PETP ausgebildet ist.

Zur Verbesserung der Dichtigkeit wird vorgeschlagen, daß im Bereich des Kolbenschaftes mindestens eine Dichtung angeordnet ist.

Zur Unterstützung einer Verwendung von relativ kleinen Steuerdrücken ist vorgesehen, daß die Steuerfläche größer als die Querschnittfläche des Kolbenschaftes dimensioniert ist.

Für eine kompakte konstruktive Realisierung erweist es sich als vorteilhaft, daß die Steuerfläche im Bereich eines der Schaftkappe abgewandt angeordneten Kolbenkopfes positioniert ist.

Zur Vermeidung von Druckverlusten trägt es ebenfalls bei, daß der Kolbenkopf mit mindestens einer Dichtung versehen ist.

Gemäß einer Ausführungsform der Erfindung ist daran gedacht, daß der Steuerkolben bereichsweise aus Metall ausgebildet sind.

Die Verwendung spezieller Führungsbänder am Steuerkolben kann vollständig dadurch vermieden werden, daß sowohl der Kolbenschaft als auch der Kolbenkopf aus Kunststoff ausgebildet sind.

Besonders günstige Materialeigenschaften können dadurch erreicht werden, daß der Steuerkolben mindestens bereichsweise aus PETP ausgebildet sind.

Zur Unterstützung einer Erzeugung der Verstellkraft für den Steuerkolben wird vorgeschlagen, daß von der Steuerfläche mindestens bereichsweise ein Steuerraum zur Zuleitung eines Steuerdruckes begrenzt ist.

Insbesondere bei einer metallischen Realisierung des Steuerkolbens ist daran gedacht, daß der Steuerkolben als Anschlagdämpfung mit einem Dämpfungselement versehen ist.

Im wesentlichen gleich große Betätigungskräfte beim Schließen des Ventils und beim Halten des Ventils in der geschlossenen Stellung können dadurch vorgegeben werden, daß der Steuerkolben einen Kolbenschaft aufweist, dessen Querschnittfläche im wesentlichen gleich einer Querschnittfläche einer vom Steuerkolben verschließbaren und einem Zylinderinnenraum zugewandten Durchströmungsfläche des Hauptströmungsweges dimensioniert ist.

Zur Gewährleistung einer definierten Positionierung der Schaftkappe relativ zum Kolbenschaft wird vorgeschlagen, daß die Schaftkappe mit einer Vorspannung vom Steuerkolben gehaltert ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen schematischen Vertikalschnitt durch ein Hochdruckventil,
- Fig. 6:: eine schematische Darstellung eines Steuerkolbens aus Kunststoff, der im Steuerzylinder geführt ist und
- Fig. 7:: eine Prinzipdarstellung eines zweiteiligen Steuerkolbens, der mit einem Kolbenschaft in einer Hülse geführt ist.

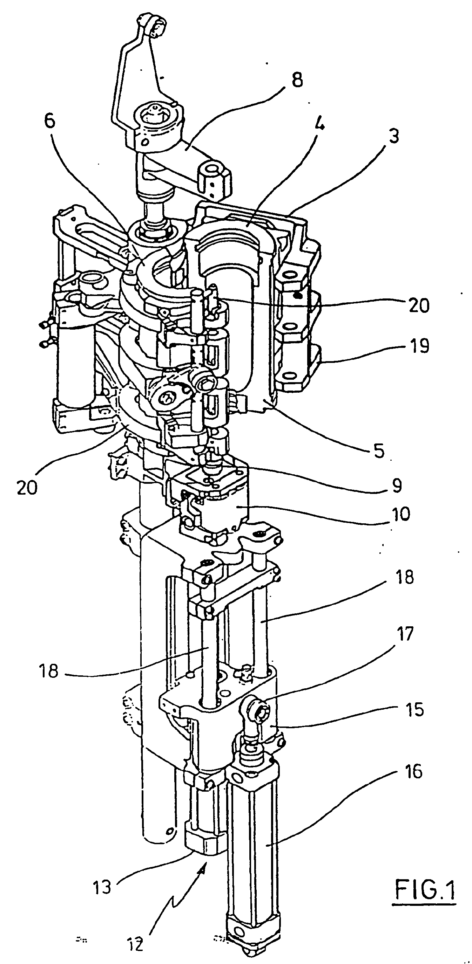

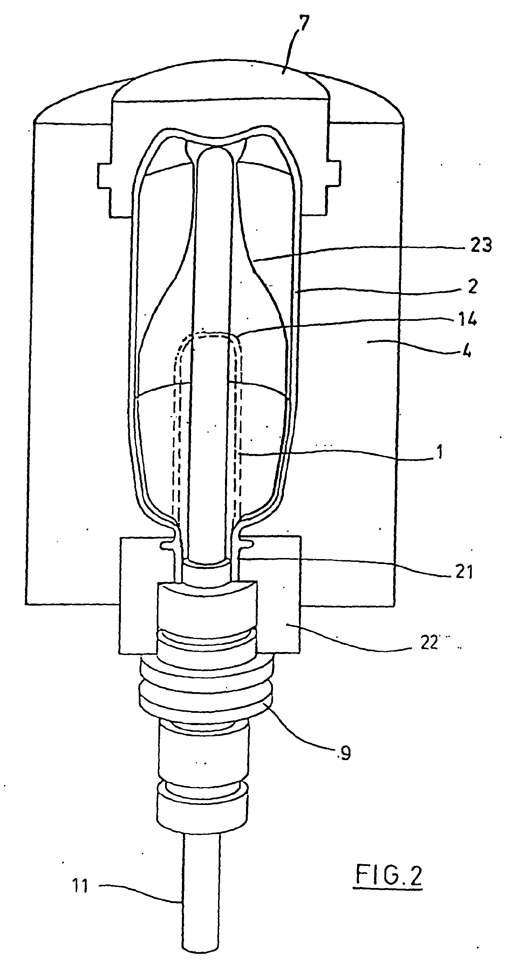

Eine Verwendung der Vorrichtung zur pneumatischen Steuerung kann beispielsweise zur Steuerung der Blasluftzuführung bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

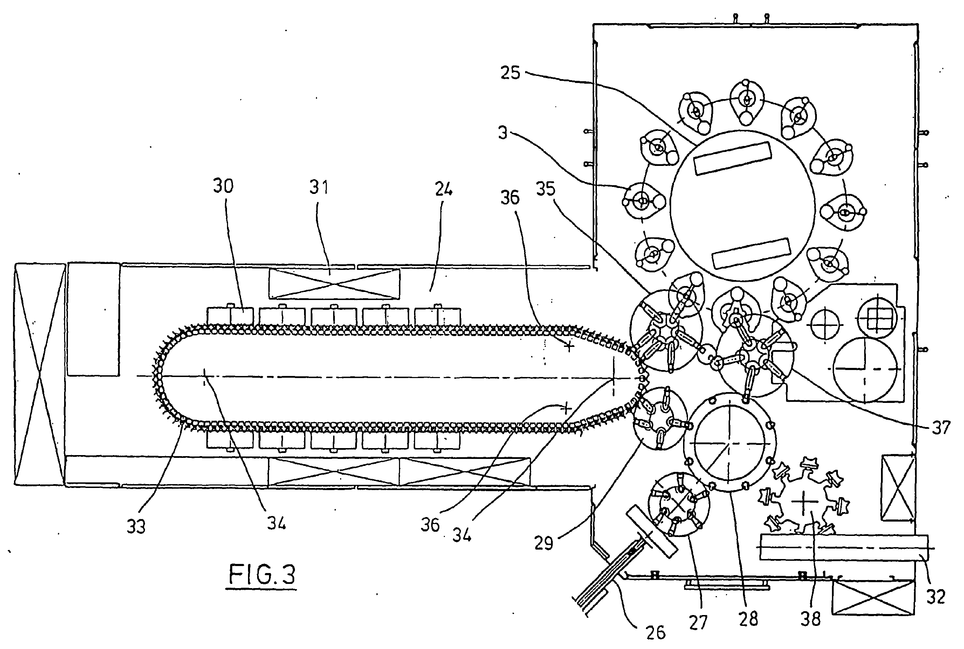

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

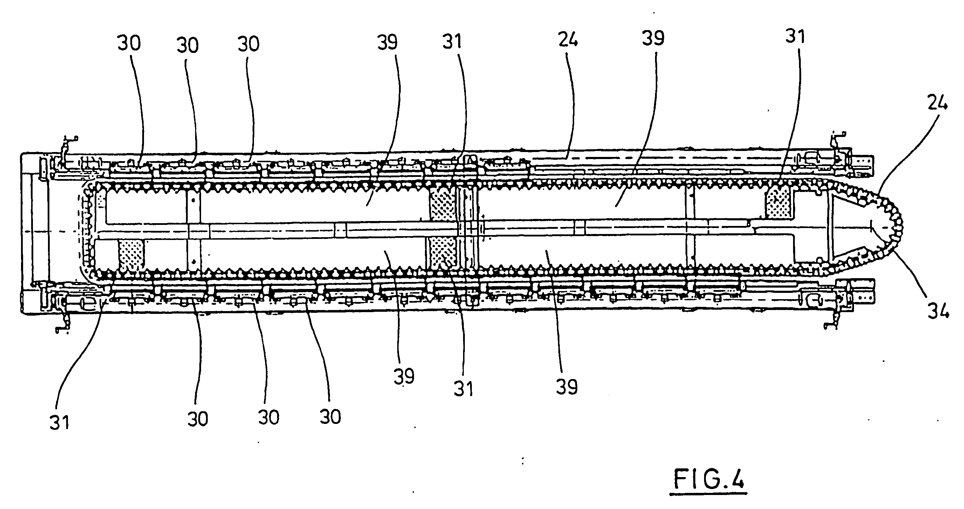

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

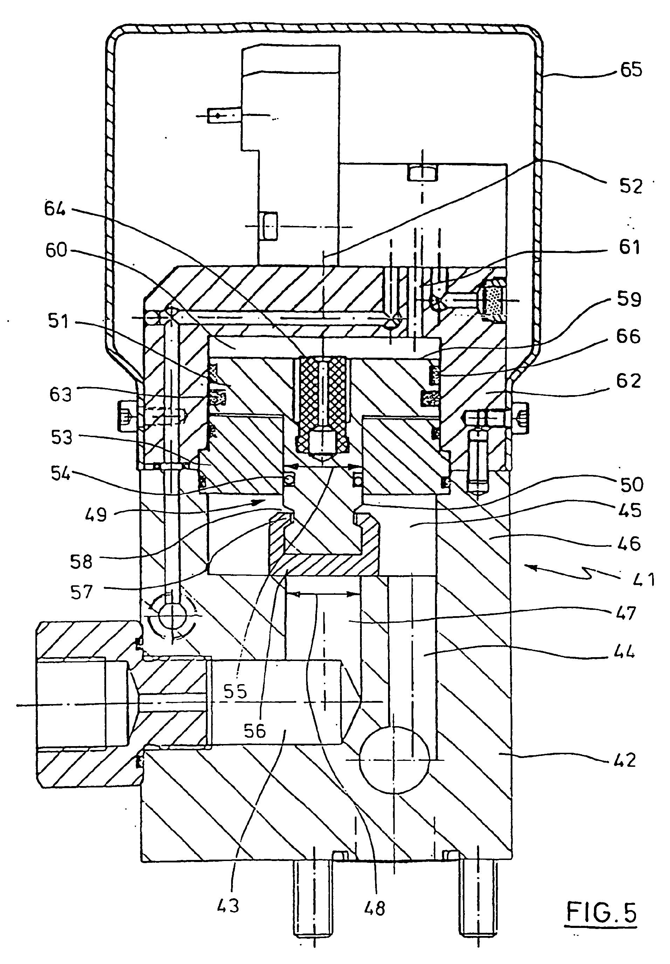

Fig. 5 zeigt einen Vertikalschnitt durch eine als ein Hochdruckventil (41) ausgebildete Vorrichtung zur pneumatischen Steuerung. In einem Ventilsockel (42) sind ein Zuleitungskanal (43) sowie ein Ableitungskanal (44) angeordnet, die in einen Zylinderinnenraum (45) einmünden, der zumindest bereichsweise von einer Zylinderwandung (46) des Ventilsockels (42) begrenzt ist. Im Bereich seiner dem Zylinderinnenraum (45) zugewandten Ausdehnung stellt der Zuleitungskanal (43) einen Hauptströmungsweg (47) für den zu schaltenden Hochdruck mit einer Durchströmungsfläche (48) bereit.

Innerhalb des Zylinderinnenraumes (45) ist ein Steuerkolben (49) geführt, der im wesentlichen aus einem Kolbenschaft (50) und einem Kolbenkopf (51) ausgebildet ist. Der Kolbenschaft (50) und der Kolbenkopf (51) erstrecken sich im wesentlichen symmetrisch entlang einer Kolbenlängsachse (52) und bilden gemeinsam eine pilzartige Grundstruktur des Steuerkolbens (49) aus.

Der Kolbenschaft (50) erstreckt sich durch eine vom Ventilsockel (42) gehalterte Kolbenhülse (53) hindurch und ist relativ zur Kolbenhülse (53) mit einer Dichtung (54) abgedichtet. Die Dichtung (54) kann beispielsweise als ein O-Ring ausgebildet sein.

Der Kolbenschaft (50) weist bei der dargestellten Ausführungsform eine Querschnittfläche (55) auf, die im wesentlichen gleich zur Durchströmungsfläche (48) dimensioniert ist. Bei der in Fig. 5 dargestellten Ausführungsform ist auf den Kolbenschaft (50) im Bereich dessen dem Kolbenkopf (51) abgewandten Ausdehnung eine Schaftkappe (56) aufgesetzt. Insbesondere ist daran gedacht, die Schaftkappe (56) mit einem Steg (57) in einer Nut (58) des Kolbenschaftes (50) zu haltern. In besonders einfacher Weise kann dies bei einer ausreichend elastischen Realisierung der Schaftkappe (56) in Form einer Schnappverbindung erfolgen.

Im Bereich seiner dem Kolbenschaft (50) abgewandten Ausdehnung weist der Kolbenkopf (51) eine Steuerfläche (59) auf, die von einem Steuerdruck zur Positionierung des Steuerkolbens (49) innerhalb des Zylinderinnenraumes (45) beaufschlagbar ist. Angrenzend zur Steuerfläche (59) erstreckt sich ein Steuerraum (60), in den eine Zuführleitung (61) für den Steuerdruck einmündet.

Der Steuerraum (60) wird bereichsweise von einem Zylinderkopf (62) begrenzt, der vom Ventilsockel (42) gehaltert ist. Relativ zu einer Innenwandung des Zylinderkopfes (62) ist der Kolbenkopf (51) von einer Dichtung (63) abgedichtet. Zur Gewährleistung einer Anschlagdämpfung bei einer Positionierung des Steuerkolbens (49) kann in den Kolbenkopf (51) ein Dämpfungselement (64) eingesetzt sein.

Zur Bereitstellung einer kompakten Ausführung ist es möglich, auf den Zylinderkopf (62) eine Zylinderhaube (65) oder einen Distanzbügel aufzusetzen, um den oberen Teil des Zylinderkopfes (62) vor mechanischen äußeren Belastungen zu schützen. Bei einer Konstruktion des Steuerkolbens (49) bereichsweise aus Metall werden zusätzlich zu den Dichtungen (54, 63) Führungselemente (66) aus Kunststoff oder ähnlichen weichen Materialien eingesetzt, um einen metallischen Kontakt zwischen dem Steuerkolben (49) und der in der Regel ebenfalls aus Metall ausgebildeten Zylinderwandung (46) beziehungsweise der Kolbenhülse (53) zu verhindern.

Fig. 5 zeigt das Hochdruckventil (41) in einem verschlossenen Zustand des Hauptströmungsweges (47). Der Kolbenschaft (50) ist hierbei mit der Schaftkappe (56) gegen die Umrandung des Hauptströmungsweges (47) geführt und dichtet den Zylinderinnenraum (45) gegenüber dem Hauptströmungsweg (47) ab. Im Bereich des Steuerraumes (60) liegt ein Steuerdruck an, der die Steuerfläche (59) beaufschlagt und eine auf den Steuerkolben (49) einwirkende Kraft erzeugt, die größer als die vom Hauptdruck auf die Schaftkappe (56) einwirkende Kraft dimensioniert ist. Hierdurch wird ein zuverlässiges Schließen des Hochdruckventils (41) gewährleistet. Bei einer Absenkung des Steuerdruckes wird der Steuerkolben (49) durch den einwirkenden Hochdruck in Richtung der Kolbenlängsachse (52) verschoben und der Hochdruck kann aus dem Hauptströmungsweg (47) durch den Zylinderinnenraum (47) hindurch in den Bereich des Ableitungskanals (44) übertreten. Das Hochdruckventil (41) befindet sich hierdurch in einem geöffneten Zustand.

Bei einem erneuten Anheben des Steuerdruckes kehrt der Steuerkolben (49) in die Ursprungsposition zurück und dichtet den Hauptströmungsweg (47) wieder ab. Aufgrund der beim dargestellten Ausführungsbeispiel im wesentlichen gleichen Dimensionierung der Querschnittfläche (55) des Kolbenschaftes (50) und der Durchströmungsfläche (48) des Hauptströmungsweges (47) wirken auf den Steuerkolben (49) sowohl in einem geöffneten Zustand als auch in einem geschlossenen Zustand des Hochdruckventils (41) bezogen auf den Hochdruck im wesentlichen die gleichen Kräfte ein. Für ein Schließen des Ventils sind hierdurch im wesentlichen die gleichen Steuerkräfte wie für die Ventilzuhaltung erforderlich.

Insbesondere ist daran gedacht, den Steuerkolben (49) vollständig aus Kunststoff auszubilden. Die Führungselemente (66) können dann komplett entfallen. Darüber hinaus ist daran gedacht, den Kolbenschaft (50) und den Kolbenkopf (51) gemeinsam und einteilig aus dem gleichen Kunststoff zu realisieren. Verwendung kann dabei beispielsweise PETP finden. Bei einer teilweisen metallischen Ausführung ist insbesondere an die Verwendung von Aluminium gedacht.

Für die Realisierung der Schaftkappe (56) wird ebenfalls bevorzugt ein Kunststoff verwendet. Auch hier ist beispielsweise an die Verwendung von PETP gedacht.

Gemäß einer typischen Dimensionierung bei einer Anwendung für die Schaltung von Blasdrücken wird der Kolbenkopf (51) mit einem Durchmesser von etwa 50mm versehen. Ein Durchmesser des Kolbenschaftes (50) beträgt typischerweise etwa 14mm bis 20mm, insbesondere 18mm, ebenfalls beträgt ein Durchmesser der Durchströmungsfläche (48) typischerweise etwa 14mm bis 20mm, insbesondere 18mm. Bei einer derartigen Dimensionierung erweist sich in der Regel für die Schaltung eines Hauptdruckes von maximal 40 bar ein Steuerdruck von weniger als 10 bar als ausreichend.

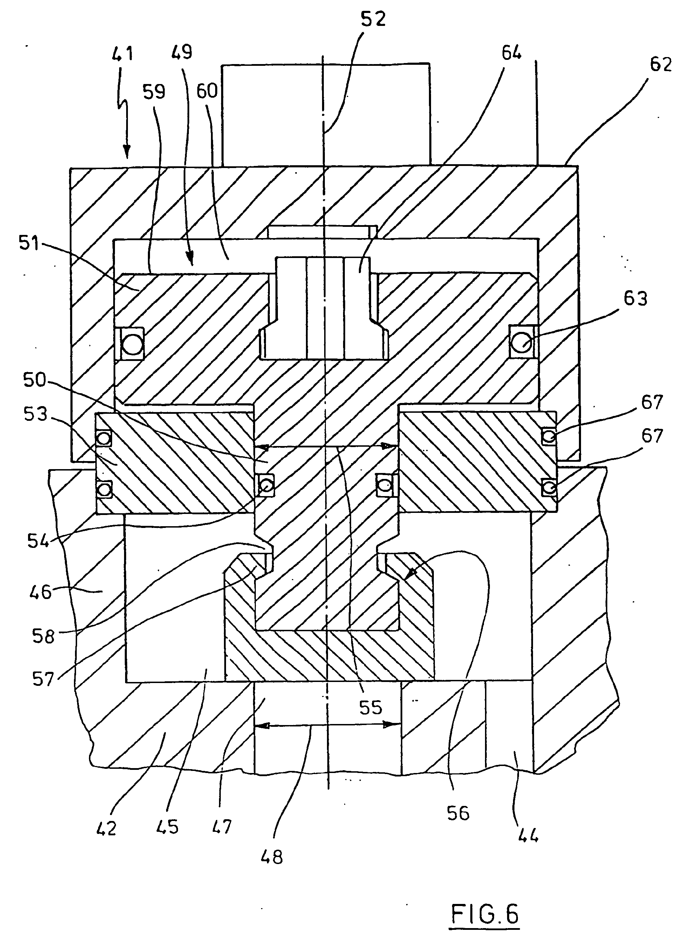

Fig. 6 zeigt eine teilweise Darstellung eines Längsschnittes durch ein Hochdruckventil (41) mit einem Steuerkolben (49), der vollständig aus Kunststoff ausgebildet ist. Der Steuerkolben (49) weist deshalb nur die Dichtungen (54, 63) auf und kann ohne Verwendung von Führungselementen (66) realisiert werden Aus Fig. 6 ist ebenfalls erkennbar, daß zur Gewährleistung einer hochwirksamen Abdichtung auch zwischen der Kolbenhülse (53) und dem Ventilsockel (42) beziehungsweise dem Zylinderkopf (62) Dichtungen (67) angeordnet sind. Die Dichtungen (67) können beispielsweise als O-Ringe realisiert sein.

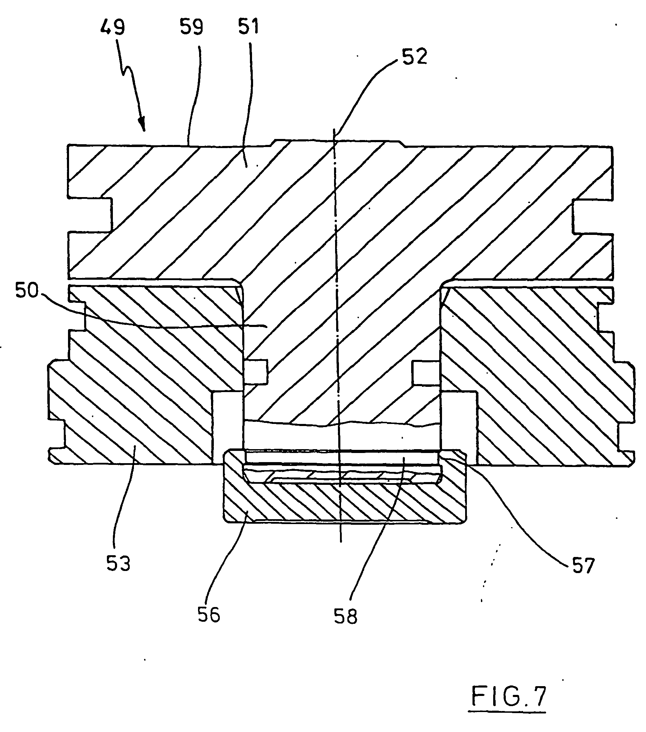

Fig. 7 veranschaulicht nochmals die Anordnung der Schaftkappe (56) im Bereich des Kolbenschaftes (50) sowie die Anordnung von nutförmigen Vertiefungen im Steuerkolben (49) und im Bereich der Kolbenhülse (53) zur Aufnahme der Dichtungen (54, 63, 67). Zur Ermöglichung einer geringen Dimensionierung des Zylinderinnenraumes (45) in Richtung der Kolbenlängsachse (52) ist bei der in Fig. 7 dargestellten Ausführungsform im Bereich der Kolbenhülse (53) eine Vertiefung (68) zur Aufnahme der Schaftkappe (56) in einem geöffneten Zustand des Hochdruckventils (41) angeordnet.

## Patentansprüche

1. Vorrichtung mit auf einem rotierenden Blasrad (25) angeordneten Blasstationen (3) zur Blasformung von Behältern aus einem thermoplastischen Material, mit einer Einrichtung zur pneumatischen Steuerung eines Blasdruckes, **dadurch gekennzeichnet, daß** die Einrichtung zur pneumatischen Steuerung einen in einem Zylinder geführten Steuerkolben (4) aufweist, der in Richtung einer Kolbenlängsachse (52) verschieblich gelagert ist und bei der durch den Zylinder hindurch ein vom Steuerkolben (49) verschließbarer Hauptströmungsweg (47) verläuft, sowie bei der der Steuerkolben (49) mit einer Steuerfläche (59) versehen ist, die einem Steuerraum (60) des Zylinders zugewandt ist und die zur Übertragung einer Steuerkraft auf den Steuerkolben (49) ausgebildet ist, und bei der der Steuerkolben (49) mindestens bereichsweise aus einem Kunststoff ausgebildet ist, sowie bei der der Hauptströmungsweg (47) derart angeordnet ist, daß bei einer Absenkung des Steuerdruckes der Steuerkolben (49) durch den einwirkenden Hochdruck in Richtung der Kolbenlängsachse (52) verschoben wird.

2. Vorrichtung nach Anspruch 1, **dadurch gekennzeichnet, daß** der Steuerkolben (49) mindestens zweiteilig ausgebildet ist.

3. vorrichtung nach Anspruch 1 oder 2, **dadurch gekennzeichnet, daß** der Steuerkolben (49) eine Schaftkappe (56) aufweist.

4. Vorrichtung nach Anspruch 3, **dadurch gekennzeichnet, daß** die Schaftkappe (56) über eine Schnappverbindung im Bereich eines Kolbenschaftes (50) des Steuerkolbens (49) befestigt ist.

5. Vorrichtung nach Anspruch 4, **dadurch gekennzeichnet, daß** der Kolbenschaft (50) eine Nut (58) zur Halterung der Schaftkappe (56) aufweist.

6. Vorrichtung nach Anspruch 5, **dadurch gekennzeichnet, daß** die Schaftkappe (56) mit einem Steg (57) in die Nut (58) eingreift.

7. Vorrichtung nach einem der Ansprüche 3 bis 6, **dadurch gekennzeichnet, daß** die Schaftkappe (56) mindestens bereichsweise aus Kunststoff ausgebildet ist.

8. Vorrichtung nach einem der Ansprüche 3 bis 7, **dadurch gekennzeichnet, daß** die Schaftkappe (56) mindestens bereichsweise aus PETP ausgebildet ist.

9. Vorrichtung nach einem der Ansprüche 4 bis 8, **dadurch gekennzeichnet, daß** im Bereich des Kolbenschaftes (50) mindestens eine Dichtung (54) angeordnet ist.

10. Vorrichtung nach einem der Ansprüche 4 bis 9, **dadurch gekennzeichnet, daß** die Steuerfläche (59) größer als die Querschnittfläche (55) des Kolbenschaftes (50) dimensioniert ist.

11. Vorrichtung nach einem der Ansprüche 3 bis 10, **dadurch gekennzeichnet, daß** die Steuerfläche (59) im Bereich eines der Schaftkappe (56) abgewandt angeordneten Kolbenkopfes (51) positioniert ist.

12. Vorrichtung nach Anspruch 11, **dadurch gekennzeichnet, daß** der Kolbenkopf (51) mit mindestens einer Dichtung (63) versehen ist.

13. Vorrichtung nach einem der Ansprüche 1 bis 12, **dadurch gekennzeichnet, daß** der Steuerkolben (49) bereichsweise aus Metall ausgebildet ist.

14. Vorrichtung nach einem der Ansprüche 4 bis 12, **dadurch gekennzeichnet, daß** sowohl der Kolbenschaft (50) als auch der Kolbenkopf (51) aus Kunststoff ausgebildet sind.

15. Vorrichtung nach einem der Ansprüche 1 bis 12, **dadurch gekennzeichnet, daß** der Steuerkolben (49) mindestens bereichsweise aus PETP ausgebildet ist.

16. Vorrichtung nach einem der Ansprüche 1 bis 15, **dadurch gekennzeichnet, daß** von der Steuerfläche (59) mindestens bereichsweise ein Steuerraum (60) zur Zuleitung eines Steuerdruckes begrenzt ist.

17. vorrichtung nach einem der Ansprüche 1 bis 16, **dadurch gekennzeichnet, daß** der Steuerkolben (49) als Anschlagdämpfung mit einem Dämpfungselement (64) versehen ist.

18. vorrichtung nach einem der Ansprüche 1 bis 17, **dadurch gekennzeichnet, daß** der Steuerkolben (49) einen Kolbenschaft (50) aufweist, dessen Querschnittfläche (55) im wesentlichen gleich einer Querschnittfläche einer vom Steuerkolben (49) verschließbaren und einem Zylinderinnenraum (45) zugewandten Durchströmungsfläche (48) des Hauptströmungsweges (47) dimensioniert ist.

19. Vorrichtung nach einem der Ansprüche 3 bis 18, **dadurch gekennzeichnet, daß** die Schaftkappe (56) mit einer Vorspannung vom Steuerkolben (49) gehaltert ist.

20. vorrichtung nach einem der Ansprüche 1 bis 19, **dadurch gekennzeichnet, daß** mindestens eine der Dichtungen (54, 63) in einer Nut angeordnet ist, die sich im Bereich der Ausbildung des Steuerkolbens (49) aus Kunststoff erstreckt.

21. Vorrichtung nach einem der Ansprüche 1 bis 20, **dadurch gekennzeichnet, daß** der Steuerkolben (49) im Bereich der Steuerfläche (59) aus Kunststoff ausgebildet ist.

22. Vorrichtung nach einem der Ansprüche 1 bis 21, **dadurch gekennzeichnet, daß** der Steuerkolben (49) im Bereich seiner dem Hauptströmungsweg (47) zugewandten Ausdehnung aus Kunststoff ausgebildet ist.

## Claims

1. Device with blow stations (3) disposed on a rotating blow wheel (25) for blow-moulding containers made from thermoplastic material, with a unit for pneumatically controlling a blow pressure, **characterised in that** the pneumatic control unit has a control piston (4) guided in a cylinder which is mounted so as to be displaceable in the direction of a piston longitudinal axis (52), with a main flow path (47) which can be closed by the control piston (49) extending through the cylinder, and the control piston (49) is provided with a control surface (59) which is directed towards a control chamber (60) of the cylinder and is designed to transmit a control force to the control piston (49), which control piston (49) is at least partially made from a plastic material, and in which the main flow path (47) is so disposed that when the control pressure is reduced, the control piston (49) is displaced by the high pressure acting in the direction of the piston longitudinal axis due (52).

2. Device as claimed in claim 1, **characterised in that** the control piston (49) is made from at least two parts.

3. Device as claimed in claim 1 or 2, **characterised in that** the control piston (49) has a shaft cap (56).

4. Device as claimed in claim 3, **characterised in that** the shaft cap (56) is secured by means of a snap-fit connection in the region of a piston shaft (50) of the control piston (49).

5. Device as claimed in claim 4, **characterised in that** the piston shaft (50) has a groove (58) for retaining the shaft cap (56).

6. Device as claimed in claim 5, **characterised in that** the shaft cap (56) locates in the groove (58) by means of a web (57).

7. Device as claimed in one of claims 3 to 6, **characterised in that** at least parts of the shaft cap (56) are made from plastic.

8. Device as claimed in one of claims 3 to 7, **characterised in that** at least parts of the shaft cap (56) are made from PETP.

9. Device as claimed in one of claims 4 to 8, **characterised in that** at least one seal (54) is disposed in the region of the piston shaft (50).

10. Device as claimed in one of claims 4 to 9, **characterised in that** the control surface (59) is dimensioned as to be bigger than the cross-sectional surface area (55) of the piston shaft (50).

11. Device as claimed in one of claims 3 to 10, **characterised in that** the control surface (59) is positioned in the region of a piston head (51) remote from the shaft cap (56).

12. Device as claimed in claim 11, **characterised in that** the piston head (51) is provided with at least one seal (63).

13. Device as claimed in one of claims 1 to 12, **characterised in that** at least parts of the control piston (49) are made from metal.

14. Device as claimed in one of claims 4 to 12, **characterised in that** both the piston shaft (50) and the piston head (51) are made from plastic.

15. Device as claimed in one of claims 1 to 12, **characterised in that** at least parts of the control piston (49) are made from PETP.

16. Device as claimed in one of claims 1 to 15, **characterised in that** at least parts of a control chamber (60) for delivering a control pressure are bounded by the control surface (59).

17. Device as claimed in one of claims 1 to 16, **characterised in that** the control piston (49) is provided with a damping element (64) to provide thrust damping.

18. Device as claimed in one of claims 1 to 17, **characterised in that** the control piston (49) has a piston shaft (50), the cross-sectional surface area (55) of which is dimensioned so as to be essentially identical to a cross-sectional surface area of a passage surface (48) of the main flow path (47) which can be closed by the control piston (49) and is directed towards a cylinder interior (45).

19. Device as claimed in one of claims 3 to 18, **characterised in that** the shaft cap (56) is retained by a pre-biassing force of the control piston (49).

20. Device as claimed in one of claims 1 to 19, **characterised in that** at least one of the seals (54, 63) is disposed in a groove extending in the part of the control piston (49) made from plastic.

21. Device as claimed in one of claims 1 to 20, **characterised in that** the part of the control piston (49) constituting the control surface (59) is made from plastic.

22. Device as claimed in one of claims 1 to 21, **characterised in that** the control piston (49) is made from plastic in the region of its extension directed towards the main flow path (47).

## Revendications

1. Dispositif de moulage-soufflage de récipients à partir d'un matériau thermoplastique, qui présente des postes de soufflage (3) disposés sur une roue rotative de soufflage (25) et un dispositif de commande pneumatique de la pression de soufflage, **caractérisé en ce que** le dispositif de commande pneumatique présente un piston de commande (7) guidé dans un cylindre et monté à coulissement dans la direction de l'axe longitudinal (52) du piston, le cylindre étant traversé par le parcours principal d'écoulement (47) qui peut être fermé par le piston de commande (49), le piston de commande (49) étant doté d'une surface de commande (59) tournée vers un espace de commande (60) du cylindre et configuré pour transmettre une force de commande au piston de commande (49), au moins certaines parties du piston de commande (49) étant réalisées en matière synthétique et le parcours principal d'écoulement (47) étant disposé de telle sorte que lorsque la pression de commande diminue, le piston de commande (49) est déplacé dans la direction de l'axe longitudinal (52) du piston par l'action de la haute pression.

2. Dispositif selon la revendication 1, **caractérisé en ce que** le piston de commande (49) est réalisé en au moins deux parties.

3. Dispositif selon les revendications 1 ou 2, **caractérisé en ce que** le piston de commande (49) présente un bonnet de tige (56).

4. Dispositif selon la revendication 3, **caractérisé en ce que** le bonnet de tige (56) est fixé par une liaison rapide à la partie qui forme la tige (50) du piston de commande (49).

5. Dispositif selon la revendication 4, **caractérisé en ce que** la tige du piston (50) présente une rainure (58) de maintien du bonnet de tige (56).

6. Dispositif selon la revendication 5, **caractérisé en ce que** le bonnet de tige (56) s'engage par une nervure (57) dans la rainure (58).

7. Dispositif selon l'une des revendications 3 à 6, **caractérisé en ce qu'**au moins certaines parties du bonnet de tige (56) sont réalisées en matière synthétique.

8. Dispositif selon l'une des revendications 3 à 7, **caractérisé en ce qu'**au moins certaines parties du bonnet de tige (56) sont réalisées en PETP.

9. Dispositif selon l'une des revendications 4 à 8, **caractérisé en ce qu'**au moins un joint d'étanchéité (54) est disposé dans la partie qui forme la tige (50) du piston.

10. Dispositif selon l'une des revendications 4 à 9, **caractérisé en ce que** la surface de commande (59) est plus grande que la superficie (55) de la section transversale de la tige de piston (50).

11. Dispositif selon l'une des revendications 3 à 10, **caractérisé en ce que** la surface de commande (59) est disposée dans la partie qui forme une tête de piston (51) qui n'est pas tournée vers le bonnet de tige (56).

12. Dispositif selon la revendication 11, **caractérisé en ce que** la tête du piston (51) est dotée d'au moins un joint d'étanchéité (63).

13. Dispositif selon l'une des revendications 1 à 12, **caractérisé en ce qu'**au moins certaines parties du piston de commande (49) sont réalisées en métal.

14. Dispositif selon l'une des revendications 4 à 12, **caractérisé en ce que** tant la tige de piston (50) que la tête de piston (51) sont réalisées en matière synthétique.

15. Dispositif selon l'une des revendications 1 à 12, **caractérisé en ce qu'**au moins certaines parties du piston de commande (49) sont réalisées en PETP.

16. Dispositif selon l'une des revendications 1 à 15, **caractérisé en ce qu'**au moins certaines parties d'une chambre de commande (60) qui sert à apporter une pression de commande sont délimitées par la surface de commande (59).

17. Dispositif selon l'une des revendications 1 à 16, **caractérisé en ce que** le piston de commande (49) est doté d'un élément d'amortissement (64) qui sert à amortir les chocs.

18. Dispositif selon l'une dés revendications 1 à 17, **caractérisé en ce que** le piston de commande (49) présente une tige de piston (50) dont la surface (55) de la section transversale est essentiellement égale à la surface de la section transversale d'une surface d'écoulement (48) du parcours principal d'écoulement (47) tournée vers l'espace intérieur (45) du cylindre et apte à être fermée par le piston de commande (49).

19. Dispositif selon l'une des revendications 3 à 18, **caractérisé en ce que** le bonnet de tige (56) est maintenu sous précontrainte par le piston de commande (49).

20. Dispositif selon l'une des revendications 1 à 19, **caractérisé en ce qu'**au moins l'un des joints d'étanchéité (54, 63) est disposé dans une rainure qui s'étend dans la partie du piston de commande (40) réalisée en matière synthétique.

21. Dispositif selon l'une des revendications 1 à 20, **caractérisé en ce que** la partie qui forme la surface de commande (59) du piston de commande (49) est réalisée en matière synthétique.

22. Dispositif selon l'une des revendications 1 à 21, **caractérisé en ce que** la partie de l'extension du piston de commande (49) tournée vers le parcours principal d'écoulement (47) est réalisée en matière synthétique.
